(19) Europäisches Patentamt

European Patent Office

Office européen des brevets

(11) **EP 1 087 407 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.⁷: **G21C 17/06**

(21) Anmeldenummer: **00119142.8**

(22) Anmeldetag: **04.09.2000**

(54) **Verfahren und Vorrichtung zum Inspizieren eines Kernreaktor-Brennelements**

Method and installation for inspecting a nuclear reactor fuel assembly

Procédé et installation d'inspection d'un assemblage de combustible nucléaire

(84) Benannte Vertragsstaaten:
**CH DE ES FI FR LI SE**

(30) Priorität: **24.09.1999 DE 19945930**

(43) Veröffentlichungstag der Anmeldung:
**28.03.2001 Patentblatt 2001/13**

(73) Patentinhaber: **Framatome ANP GmbH**
**91058 Erlangen (DE)**

(72) Erfinder:
• **Beier, Martin**
**91353 Hausen (DE)**
• **Hummel, Wolfgang**
**91085 Weisendorf (DE)**
• **Kindlein, Wolfram**
**91086 Aurachtal (DE)**
• **Uckert, Jürgen, Dr.**
**91080 Marloffstein (DE)**

(74) Vertreter: **Mörtel & Höfner**
**Patentanwälte**
**Blumenstrasse 1**
**90402 Nürnberg (DE)**

(56) Entgegenhaltungen:
EP-A- 0 080 418          EP-A- 0 224 101
FR-A- 2 304 149          FR-A- 2 721 704
FR-A- 2 754 892

• PATENT ABSTRACTS OF JAPAN vol. 012, no. 104 (P-685), 6. April 1988 (1988-04-06) & JP 62 238406 A (HITACHI LTD), 19. Oktober 1987 (1987-10-19)
• PATENT ABSTRACTS OF JAPAN vol. 014, no. 104 (P-1013), 26. Februar 1990 (1990-02-26) & JP 01 307611 A (HITACHI LTD), 12. Dezember 1989 (1989-12-12)
• PATENT ABSTRACTS OF JAPAN vol. 1995, no. 11, 26. Dezember 1995 (1995-12-26) & JP 07 218474 A (HITACHI LTD;OTHERS: 01), 18. August 1995 (1995-08-18)
• PATENT ABSTRACTS OF JAPAN vol. 016, no. 053 (P-1309), 10. Februar 1992 (1992-02-10) & JP 03 252592 A (NUCLEAR FUEL IND LTD), 11. November 1991 (1991-11-11)
• PATENT ABSTRACTS OF JAPAN vol. 015, no. 015 (P-1151), 11. Januar 1991 (1991-01-11) & JP 02 259401 A (NUCLEAR FUEL IND LTD), 22. Oktober 1990 (1990-10-22)

**Beschreibung**

Die Erfindung geht aus von einem Verfahren und einer Vorrichtung zum Inspizieren von Kernreaktor-Brennelementen. Ein solches Brennelement besteht aus einem Bündel von Brennstäben, an deren einem Ende ein Kopfteil und an deren anderem Ende ein Fußteil sitzt. Zwischen Kopf- und Fußteil liegen in axialen Abständen übereinander angeordnete Abstandhalter. Brennelemente in Siedewasser-Reaktoren sind üblicherweise noch von Kästen umgeben.

In der Regel haben diese Brennelemente einen quadratischen Querschnitt, d.h. die Außenflächen des Brennelements, die von den Außenflächen des Kopf- und Fußteils sowie des Abstandhalters bzw. des Brennelement-Kastens gebildet werden, liegen einander paarweise gegenüber. Im Idealfall sind jeweils zwei Außenflächen eines Abstandhalters zueinander und zu den entsprechenden Außenflächen des Brennelement-Fußes bzw. -Kopfes parallel.

Während des Reaktorbetriebs kann es zu Verschleißerscheinungen und Beschädigungen der Brennelemente kommen. So kann z.B. die Hüllrohrwand der Brennstäbe korrodieren und/oder Wasser kann in einzelne Brennstäbe eindringen.

Die intensive Neutronenstrahlung, der das Brennelement ausgesetzt ist, führt zu einem Strahlungswachstum der Brennstäbe und gegebenenfalls auch des Brennelement-Kastens. Inhomogenitäten in der Verteilung der thermischen Energie und des Neutronenflusses haben eine Ortsabhängigkeit des Längenwachstums zur Folge, die zu Verbiegungen und Verdrillungen des Brennelements führen kann. Auch die Stege, aus denen die Abstandhalter gefertigt sind, erleiden durch Bestrahlung und Korrosion ein Wachstum, das außerdem von der Walzrichtung beim Auswalzen des benutzten Bleches abhängt.

Da die Brennelemente im Reaktorkern mit nur wenigen Millimetern Abstand nebeneinander sitzen, verfälschen solche Veränderungen die physikalischen Zustände, für die der Reaktorbetrieb ausgelegt ist. Außerdem gibt es Probleme beim Entfernen und Einsetzen von Brennelementen, wenn die Abstandhalter breiter geworden oder tonnenförmig deformiert sind.

Üblicherweise werden in Zeitabständen von ca. einem Jahr abgebrannte Brennelemente aus dem Reaktorkern entnommen; verbleibende Brennelemente werden an andere Plätze umgesetzt und stichprobenartig auf Beschädigungen hin überprüft. Diese Untersuchung muss unter Wasser durchgeführt werden, da das bestrahlte Brennelement hochradioaktiv ist und aufgrund der Wärmeentwicklung beim Zerfall von Spaltprodukten gekühlt werden muß. Bisher wurden zur Unterwasser-Inspektion vor allem Videokameras eingesetzt, mit deren Hilfe man äußere Beschädigungen der Brennelemente, wie z.B. Abstandhalter mit abgebrochenen Ecken, feststellen kann. Aus der FR 2 721 704 ist eine Anordnung mit einer Videokamera bekannt, die zusätzlich eine Kalibrieranordnung bekannter Abmessungen enthält. Diese Kalibrieranordnung wird benutzt, um in dem aufgenommenen Videobild einen Referenzwert für Abmessungen zur Verfügung zu stellen. Außerdem sind Vorrichtungen bekannt (US-4,605,531 A), die die Brennelemente mit Ultraschallsonden abtasten. Für solche Untersuchungen wird das Brennelement in eine definierte Position zu den verwendeten Sonden gebracht. Dadurch lassen sich Beschädigungen von Brennstab-Hüllrohrwänden auffinden, in die Wasser eingedrungen ist.

Der Erfindung liegt die Aufgabe zugrunde, durch ein neues Verfahren und eine entsprechende Vorrichtung Veränderungen an einem Brennelement auf einfache Weise festzustellen. Dabei geht die Erfindung davon aus, daß Veränderungen, die durch das Wachstum der einzelnen Bauteile des Brennelements verursacht sind, und andere Dimensionsänderungen, z.B. Verbiegungen und Verdrillungen von Brennelement-Strukturteilen (wie Abstandhaltern und Brennelement-Kästen), die Funktionsfähigkeit beeinträchtigen und daher bei der Inspektion erfaßt und vermessen werden sollen.

Erfindungsgemäß wird das bestrahlte Brennelement-Bündel inspiziert, indem mindestens ein Abstandhalter des Brennelements und ein Kalibrierstab mit bekannten Abmessungen gemeinsam in einer Meßeinrichtung ausgemessen werden. Die Messungen am Kalibrierstab dienen dabei dazu, die Messungen am Abstandhalter zu eichen.

Die Kontur des Abstandhalters und des Kalibrierstabes wird hierbei punktweise ausgemessen. Zwei Punkten, die sich auf zwei ersten, in entgegengesetzte Richtungen weisenden Außenflächen des Abstandhalters gegenüber liegen, kann durch die Messung ein Meßwert für den Abstand dieser Außenflächen zugeordnet werden. Wird z.B. ein von einem Testkopf ausgehender Ultraschall-Puls an einem Punkt der Außenfläche reflektiert, so ist der Abstand des Punktes vom Testkopf proportional zur Laufzeit des Puls-Echos. Werden also die beiden gegenüberliegenden Punkte mittels gegenüberliegender Ultraschall-Testköpfe ausgemessen, deren Abstand A bekannt ist, so ist der Abstand S der beiden gegenüberliegenden Punkte (also praktisch die Breite des Abstandhalters an dieser Stelle) durch die Formel

$$S = A - c(dt_1 + dt_2)$$

gegeben, wobei c die (temperaturabhängige) Ausbreitungsgeschwindigkeit des Ultraschalls und $dt_1$ bzw. $dt_2$ die Laufzeit des jeweiligen Puls-Echos, also den Meßwert der Meßeinrichtung, darstellt. Diese Ausbreitungsgeschwindigkeit c kann im aktuellen Fall ermittelt werden, indem auch zwei Punkte ausgemessen werden, die sich auf Flächenstücken des Kalibrierstabs gegenüber liegen, die ebenfalls in diese Richtung weisen.

Für diese Messung des Kalibrierstabes gilt die gleiche Formel

$$d_o = A' - c(dt_1' + dt_2'),$$

wobei nunmehr A' der bekannte Abstand der auf die Flächenstücke gerichteten Testköpfe und $dt_1'$ bzw. $dt_2'$ die Laufzeiten des Echos sind, das jeweils an diesen Punkten der Flächenstücke erzeugt wird. Der Abstand $d_0$ dieser Flächenstücke ist aber bekannt, so daß sich die Beziehung

$$c = (A' - d_0) / (dt_1' + dt_2')$$

ergibt.

Diese Beziehung gestattet somit, die Meßwerte $dt_1$ und $dt_2$, die an den Außenflächen des Abstandhalters gewonnen sind, in geometrische Abstände umzurechnen.

Bei anderen Weggebern liefert die Meßeinrichtung z.B. Meßspannungen oder andere Größen, die im allgemeinen nicht proportional sind, sondern über eine charakteristische Funktion ("Eichkurve") in geometrische Größen umgerechnet werden können. Zur Bestimmung dieser Eichkurve wird mindestens eine Zuordnung eines zweiten Meßwerts zu einer bekannten geometrischen Größe benötigt. Solche weiteren Punkte der Eichkurve können aber mit Hilfe des Kalibrierstabes (oder eines weiteren Kalibrierstabes) ausgemessen werden, falls auch zweite (oder weitere) Flächenstücke ausgemessen werden, die in die entgegengesetzten Richtungen weisen und gegenüber den ersten Flächenstücken versetzt angeordnet sind.

Das Verfahren wird insbesondere unter Wasser durchgeführt, d.h. die Meßeinrichtung mit dem Kalibrierstab wird unter Wasser angeordnet und kann mindestens zwei einander gegenüberliegende Tastköpfe enthalten, um die Außenflächen und Flächenstücke auf die geschilderte Weise auszumessen. Dieser Vorgang kann von einer Videokamera beobachtet werden. In einer an die Meßeinrichtung angeschlossenen Recheneinrichtung werden die Messungen ausgemessen. Das von der Videokamera aufgenommene Bild wird z.B. zusammen mit geeignet ausgewählten, geeichten Meßwerten auf einem Bildschirm angezeigt. Als charakteristische Größe ist insbesondere der geeichte Meßwert für den maximalen Abstand einander gegenüberliegender Außenflächen des Abstandhalters von Interesse.

Die Verwendung von zwei Tastköpfen, die gleichzeitig zwei einander gegenüberliegende Punkte auf den Außenflächen des dazwischen liegenden Abstandhalters abtasten, hat den Vorteil, daß der gegenseitige Abstand der Punkte (also die Breite des Abstandhalters) durch eine Differenzbildung der Tastkopf-Signale gebildet wird. Dieser Abstand ist dann unabhängig davon, welche Abstände die Tastköpfe von den Außenflächen haben; systematische Meßfehler können sich also gegenseitig aufheben. Außerdem werden auch vorübergehende Einflüsse, die eine Messung verfälschen könnten, ausgeglichen, da die Messung bei jedem Meßvorgang geeicht wird.

Eine entsprechende Vorrichtung zum Inspizieren enthält also eine Meßeinrichtung mit einem Kalibrierstab bekannter Abmessungen, eine Positioniereinrichtung und eine Recheneinrichtung. Die Positioniereinrichtung fixiert die relative Lage eines Abstandhalters eines Brennelements zur Meßeinrichtung, und die Meßeinrichtung ist auf zwei in entgegengesetzte Richtungen weisende erste Außenflächen des Abstandhalters und zwei in diese Richtungen weisende erste Flächenstücke des Kalibrierstabs gerichtet. Die Meßeinrichtung kann also Meßwerte für die relative Lage der Außenflächen und Flächenstücke bilden. Die Recheneinrichtung ist derart ausgebildet, daß aus den Meßwerten und einem gespeicherten Bezugswert für die Abmessungen des Kalibrierstabes mindestens ein mittels dieses Bezugswerts geeichter maximaler Abstand der Außenflächen ermittelt und angezeigt wird.

Die Positioniereinrichtung besitzt eine Halterung, in die das Brennelement in der Richtung seiner Längsachse, also in vertikaler Richtung, einsetzbar ist und auch in horizontaler Richtung fixiert wird. Ferner enthält die Positioniereinrichtung vorteilhaft einen Positionierantrieb, mit dem die vertikale Position der Meßeinrichtung mit dem Kalibrierstab verändert werden kann. Es ist dann möglich, nacheinander mehrere Abstandhalter des Brennelements und gegebenenfalls auch den Fuß und/oder Kopf auszumessen.

Vorteilhaft enthält die Meßeinrichtung auch einen zweiten Antrieb, mit dem der Kalibrierstab an den Abstandhalter anlegbar ist.

Vorteilhaft enthält die Meßeinrichtung mehrere einander gegenüberliegende Tastköpfe, die gleichzeitig Meßwerte für mehrere Punkte auf den ersten Außenflächen und Flächenstücken bilden. Mit dieser Vorrichtung können mit hoher Genauigkeit alle charakteristischen Größen des Abstandhalters ermittelt werden, die nicht von der relativen Lage der Abstandhalter-Außenflächen in der Meßeinrichtung abhängig sind, sondern nur von der gegenseitigen Lage dieser Außenflächen.

Auf die bisher geschilderte Weise kann ein Paar von einander gegenüberliegenden Außenflächen des Abstandhalters ausgemessen werden. Ein quadratischer Abstandhalter besitzt aber noch ein weiteres Paar von Außenflächen, die ebenfalls in entgegengesetzte Richtungen weisen. Diese können mittels der gleichen Meßeinrichtung und dem gleichen Kalibrierstab ausgemessen werden, wenn die Position des Abstandhalters bezüglich der Meßeinrichtung entsprechend gedreht wird. Man kann aber auch eine Meßeinrichtung verwenden, die weitere Tastköpfe enthält, die auf diese zweiten Außenflächen und entsprechende zweite Flächenstücke des Kalibrierstabes (oder eines weiteren Kalibrierstabes) gerichtet sind.

In einer weiteren Ausführungsform des Verfahrens wird das Brennelement mit einem Endstück (z.B. dem Kopf oder dem Fuß) oder einem Abstandhalter an einem Rahmen positioniert, der eine z-Achse eines kartesischen Bezugssystems festlegt. An diesem Rahmen ist der Kalibrierstab gehalten, dessen Abmessungen in der x-Richtung des kartesischen Bezugssystems bekannt sind.

Im Rahmen sind der Abstandhalter und der Kalibrierstab derart positioniert, daß sich zwei erste Außenflächen des Abstandhalters und zwei erste Flächenstücke des Kalibrierstabes entlang der y-Richtung erstrecken. Durch Abtasten dieser Außenflächen und Flächenstücke werden Meßwerte gewonnen, aus denen auf die bereits beschriebene Weise mittels der bekannten Abmessungen des Kalibrierstabs zumindest ein geeichter Maximalwert für den Abstand der beiden ersten Außenflächen des Abstandhalters gebildet wird.

Vorteilhaft ist es, wenn zum Abtasten zwei einander gegenüberliegende Tastköpfe synchron an den ersten Außenflächen des Abstandhalters und den ersten Flächenstücken des Kalibrierstabs entlang geführt und dabei nacheinander mindestens Meßsignale gebildet werden, die dem gegenseitigen Abstand zweier gegenüberliegender Punkte auf den Außenflächen des Abstandhalters bzw. den Flächenstücken des Kalibrierstabs entsprechen. Die Meßsignale für den bekannten Abstand der Flächenstücke werden dann benutzt, um die Meßsignale für die Außenflächen in einer Recheneinrichtung automatisch in geeichte Meßwerte umzurechnen.

Ebenso ist es aber möglich, zum Abtasten mehrere Tastköpfe zu verwenden, die paarweise einander gegenüberliegen und mit denen gleichzeitig mehrere einander paarweise gegenüberliegende Punkte auf den ersten Außenflächen des Abstandhalters und den ersten Flächen des Kalibrierstabes (vorzugsweise auch auf zweiten Flächenstücken des gleichen Kalibrierstabs oder eines anderen Kalibrierstabs) ausgemessen werden. Auf diese Weise kann auch ein Paar von zweiten Außenflächen des Abstandhalters ausgemessen werden, die sich entlang der x-Richtung erstrecken. Die an diesen zweiten Außenflächen erhaltenen Meßwerte können auf die beschriebene Weise mittels des bereits für die ersten Außenflächen verwendeten Kalibrierstabs geeicht werden, zur Erhöhung der Genauigkeit kann es aber vorteilhaft sein, auch zweite Flächenstücke des Kalibrierstabs (oder eines anderen Kalibrierstabs) auszumessen, die sich ebenfalls entlang der x-Richtung erstrecken.

Eine entsprechende spezielle Vorrichtung enthält also einen Rahmen, der die z-Achse eines kartesischen Koordinatensystems festlegt, sowie einen in der x-, y-Ebene des kartesischen Koordinatensystems verschiebbaren Meßtisch mit zwei sich in y-Richtung erstreckenden Armen, zwischen denen ein Abstandhalter des Brennelements positionierbar ist. Diese Arme enthalten mindestens ein Paar einander gegenüberliegender Tastköpfe. Ferner ist mindestens ein in y-Richtung verfahrbarer Kalibrierstab vorgesehen, der unabhängig vom Meßtisch am Rahmen gehalten oder auch Teil des Meßtisches selbst sein kann. An die Tastköpfe ist eine Recheneinrichtung angeschlossen, in der ein Bezugswert für die Länge des Kalibrierstabs gespeichert ist.

Mit den Tastköpfen kann dann die Ausdehnung des Abstandhalters in der x-Richtung und die Länge des Kalibrierstabs abgetastet werden, wobei die Recheneinrichtung so ausgelegt ist, daß dort mindestens eine mittels des Bezugswerts geeichte maximale Ausdehnung des Abstandhalters in x-Richtung errechenbar ist.

Vorteilhaft ist das Brennelement mit dem Fuß oder Kopf am Rahmen positioniert, während der Meßtisch in z-Richtung verschoben werden kann.

Insbesondere ist es vorteilhaft, wenn der Meßtisch auswechselbar auf einer in z-Richtung verschiebbaren Grundplatte montiert ist und zumindest die Arme bezüglich der Grundplatte mittels eines Antriebs in x-Richtung und y-Richtung verschiebbar sind. Wenn der Meßtisch abmontiert ist, kann der Rahmen mit der Grundplatte als Träger für weitere Vorrichtungen benutzt werden, mit denen andere Messungen und/oder Reparaturarbeiten.am Brennelement vorgenommen werden.

Diese und weitere vorteilhafte Weiterbildungen der Erfindung sind in den Unteransprüchen gekennzeichnet.

Mit der Erfindung können also gegenüber den idealen Abmessungen der Bauteile des Brennelements noch Abweichungen der Abmessungen gemessen werden, die 20 μm oder weniger betragen.

Man kann dann zuverlässiger entscheiden, ob die Geometrie des Brennelements dessen Weiterverwendung zuläßt - gegebenenfalls indem man deformierte Abstandhalter ersetzt oder ein deformiertes Brennelement in eine Position im Kern umsetzt, an der die Strahlung und/oder mechanische Belastung zu einer Verformung des Brennelements führt, die die gemessene Verformung wieder rückgängig macht.

Zusätzlich kann auch die relative Lage der Außenflächen zu den entsprechenden Außenflächen am Ende des Bündels, also dem Kopfteil und/oder Fußteil des Brennelements, gemessen werden. Dadurch wird eine Verbiegung oder Verdrillung des Brennstab-Bündels erfaßt. Man kann dann z.B. ein verbogenes Bündel um 180° drehen und in der gleichen Position wieder einsetzen und erwarten, daß es sich beim weiteren Betrieb wieder zurückbiegt. Selbst in einem Siedewasser-Brennelement, dessen Kasten noch kaum deformiert ist, kann nämlich ein verbogenes oder verdrilltes Brennstab-Bündel dazu führen, daß das Bündel nicht mehr optimal im Kasten zentriert ist.

Zum besseren Verständnis der Erfindung werden zwei Ausführungsbeispiele einer Inspektionsvorrichtung anhand von sieben Figuren beschrieben. Es zeigen:

FIG 1; 2     eine Seitenansicht und einen Querschnitt durch ein Ausführungsbeispiel der erfindungsgemäßen Vorrichtung mit einem eingesetzten Brennstab-Bündel eines Siedewasser-Brennelements;

FIG 3     die Erläuterung einer mathematischen Auswertung der Messung;

FIG 4     ein Ausführungsbeispiel einer Vorrichtung mit einem Druckwasser-Brennelement;

FIG 5     einen Aufnahmeschacht und einen daran angeordneten Meßtisch für das Ausführungsbeispiel nach Figur 4;

FIG 6     den Kalibrierstab und die Tastköpfe, sowie

FIG 7; 8     die Dehnungsmeßstreifen und deren Beschaltung für das Ausführungsbeispiel der Figur 4.

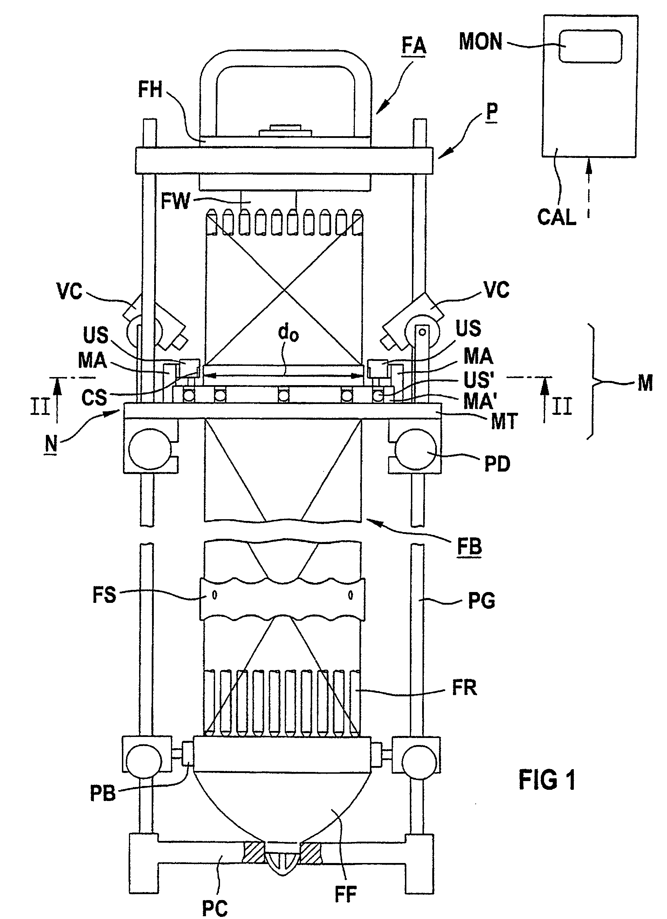

Gemäß Figur 1 wird ein Brennelement FA eines Siedewasser-Reaktors inspiziert, von dem der seitliche Kasten abgezogen ist, so daß das Brennstab-Bündel FB aus den (schematisch angedeuteten) Brennstäben FR sichtbar wird, die an mehreren axialen Positionen jeweils von einem Abstandhalter FS an vorgegebenen, regelmäßig über den Brennelement-Querschnitt verteilten Positionen gehalten werden. In der Mitte des Brennelements befindet sich ein Hohlrohr ("Wasserrohr" FW), an dem der Fußteil FF und der Kopfteil FH des Brennelements befestigt sind.

Das Brennelement-Bündel FB mit dem Kopfteil und dem Fußteil ist in eine Positioniereinrichtung P eingesetzt, wobei in diesem Fall der Fußteil FF in eine Zentrierplatte PC eingreift und über hydraulisch angepreßte seitliche Backen PB in seiner Lage fixiert ist. Die Positioniereinrichtung P enthält ferner einen Rahmen, der hier als Gestell PG aus Führungsschienen für einen Meßtisch MT ausgebildet ist. Die Führungsschienen PG definieren die z-Achse eines Bezugssystems, dessen Mittelpunkt und x-,y-Achsen durch den Mittelpunkt und die Ausrichtung der Zentrierplatte PC gegeben sind.

Der Meßtisch MT ist Teil einer Meßeinrichtung M, die mittels Antrieben PD in z-Richtung verschiebbar und auf dem Niveau eines Abstandhalters des Brennstab-Bündels FB positioniert ist.

Ein derartiger Meßtisch, der längs dem Brennstab-Bündel relativ zu den Brennstäben und ihren Abstandhaltern verschiebbar ist, ist für Inspektionseinrichtungen bereits Stand der Technik und trägt dann eine Videokamera VC, um eine optische Inspektion der Brennstäbe und der Abstandhalter vorzunehmen.

Dabei ist es üblich, die Videokamera auch in x- und y-Richtung relativ zu dem Brennstab-Bündel zu verfahren, um das Brennelement von allen Seiten zu kontrollieren. Im vorliegenden Fall sind am Meßtisch MT mehrere Videokameras vorgesehen, um einen Abstandhalter vollständig zu kontrollieren, ohne die Relativposition des Meßtisches MT verändern zu müssen.

In Figur 1 ist der zu untersuchende Abstandhalter des Brennelement-Bündels FB durch die Meßeinrichtung M verdeckt. Es sind jedoch zwei einander gegenüberliegende Arme MA der Meßeinrichtung M erkennbar, die längs der linken und rechten Außenfläche dieses Abstandhalters verlaufen und Tastköpfe US tragen, die als Ultraschall-Sonden ausgebildet sind. Diese Ultraschall-Sonden US sind teilweise auf die linke bzw. rechte Außenfläche des Abstandhalters gerichtet, teilweise auch auf die Stirnseiten eines Kalibrierstabes CS mit der bekannten Länge $d_0$. Diese Ultraschall-Sonden US senden Ultraschall-Pulse aus, die an den Außenflächen des Abstandhalters bzw. den Stirnflächen des Kalibrierstabs CS reflektiert werden. Das reflektierte Echo wird von den Ultraschall-Sonden US empfangen und aus der Laufzeit des Pulsechos kann daher der Abstand zum Abstandhalter ermittelt werden.

Der auf der Frontseite und der Rückseite des Brennstab-Bündels angeordnete Kalibrierstab CS ist jeweils auf einen weiteren Meßarm MA' aufgesetzt, der ebenfalls mehrere Ultraschall-Sonden US' trägt. Damit können auch die Außenflächen des Abstandhalters auf der (in Figur 1 sichtbaren) Vorderseite des Brennstab-Bündels und der gegenüberliegenden Rückseite ausgemessen werden. Die äußersten Ultraschall-Sonden dieser weiteren Meßarme MA' sind auf die Stirnseiten von weiteren (in Figur 1 verdeckten) Kalibrierstäben gerichtet, die sich unterhalb der Meßarme MA befinden.

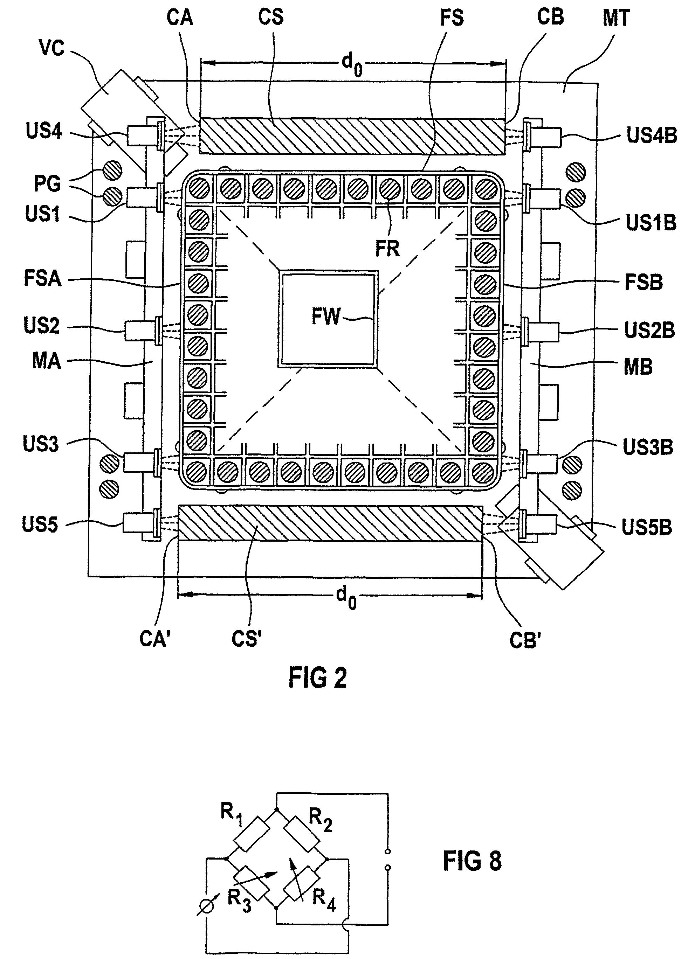

Im Querschnitt durch die Ebene II-II der Figur 1, der in Figur 2 gezeigt ist, ist erkennbar, daß die drei Ultraschall-Sonden US1, US2 und US3 an drei Meßpunkten auf der linken Außenfläche FSA des Abstandhalters FS den Abstand dieses Abstandhalters von dem entsprechenden, linken Meßarm MA messen. Die äußeren Ultraschall-Sonden US4 und US5 dagegen messen den Abstand von den Stirnflächen CA bzw. CA' des entsprechenden, von links nach rechts sich erstreckenden Kalibrierstabs CS bzw. CS'. Die Abstände zwischen diesen Stirnflächen CA und CA' einerseits und den Meßsonden US4 und US5 sind unterschiedlich, aber bekannt, so daß diese beiden Sonden US4 und US5 zwei Eich-Punkte für den Zusammenhang zwischen der Laufzeit des Ultraschall-Echos und dem zurückgelegten Weg liefern.

Auf dem rechten Arm MB liegen den Sonden US1 bis US5 entsprechende Sonden US1B bis US5B gegenüber.

Auf die gleiche Weise werden durch diese Ultraschall-Sonden an der gegenüberliegenden Außenfläche FSB des Abstandhalters drei Meßpunkte für den Abstand und auf den entsprechenden Stirnflächen CB, CB' der Kalibrierstäbe zwei Eich-Punkte gemeldet. Da die Länge do jedes Kalibrierstabs CS, CS' bekannt ist, ergibt sich daraus auch ein exakter Wert für den Abstand der gegenüberliegenden Meßarme in dieser Ebene bzw. eine rechnerische Korrektur, falls die Meßarme nicht streng parallel zueinander sind.

Auf die gleiche Weise wird in der darunterliegenden Ebene, in der die in Figur 1 gezeigten Ultraschall-Sonden US' liegen, jeweils für die beiden anderen einander gegenüberliegenden Seiten des Abstandhalters drei Meßpunkte und zwei Eich-Punkte gebildet.

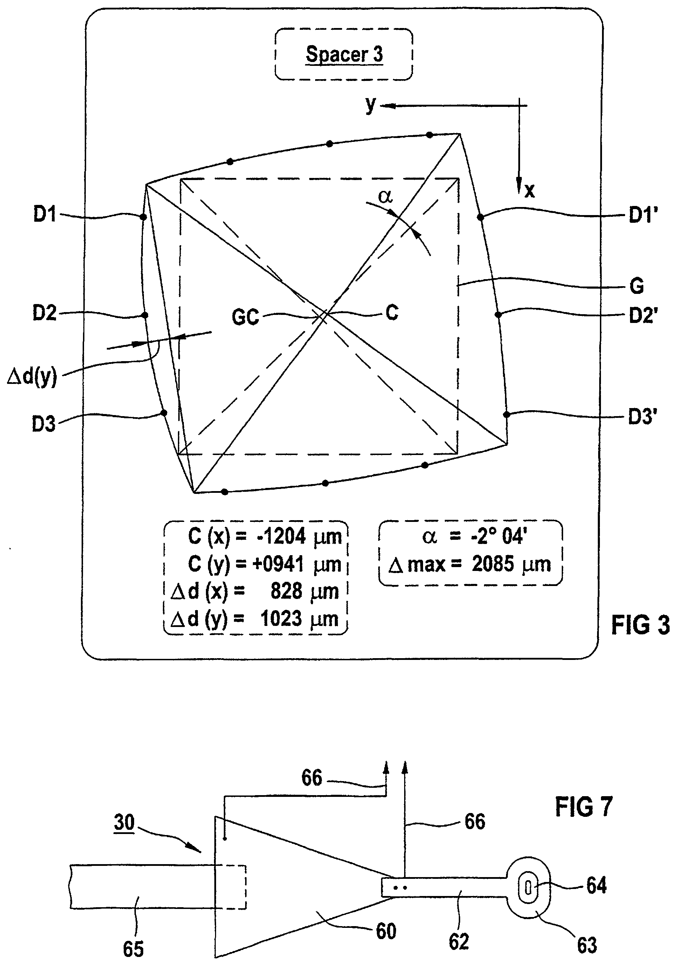

Die Signale der Sensoren werden einer Recheneinrichtung CAL mit einem Monitor MON zugeführt, die außerhalb des Wasserbeckens angeordnet ist, in dem die Inspektion stattfindet. Es handelt sich um eine Auswerte-Elektronik, von der die Sensorsignale in einer geeigneten Weise ausgewählt, geeicht und als charakteristische Größen des ausgemessenen Abstandhalters dargestellt werden, wie anhand eines auf einem Bildschirm ausgegebenen Bildes (Figur 3) erläutert wird.

In dieser Figur 3 ist zunächst die Geometrie G eines unverbogenen Brennelements dargestellt, dessen Zentrum GC im Koordinatenursprung des x-y-Systems der Meßeinrichtung M angeordnet wäre. Mit D1, D2, D3 sind die drei Meßpunkte einer Außenfläche, mit D1', D2', D3' die entsprechenden, bereits geeichten Meßpunkte an der gegenüberliegenden Außenfläche dargestellt, die sich aus den Ultraschall-Echos ergeben.

Wichtigste Größe zur Beurteilung des betreffenden Abstandhalters (hier: des dritten Abstandhalters, "Spacer 3") ist der maximale Abstand $\Delta$max gegenüberliegender Außenflächen. Falls das Brennelement nicht verdrillt ist, ist dies der maximale Wert aus den Größen $\Delta(y_1)$, $\Delta(y_2)$, $\Delta(y_3)$, $\Delta(x_1)$, $\Delta(x_2)$, $\Delta(x_3)$, wobei $\Delta(y_1)$ die Differenz der y-Koordinaten der einander gegenüberliegenden Punkte D1, D1' ist. Entsprechend sind den jeweils einander gegenüberliegenden Punkten D2, D2' bzw. D3, D3' die Differenzen $\Delta(y_2)$ und $\Delta(y_3)$ und den weiteren, in Figur 3 gezeichneten Punkte-Paaren die Differenzen $\Delta(x1)$, $\Delta(x_2)$, $\Delta(x_3)$ der x-Koordinaten zugeordnet. $\Delta$max kann dann direkt in Mikrometern oder in Prozent - bezogen auf das ideale Brennelement - angegeben werden. Die Größe $\Delta d(y)$, die eine konvexe Biegung der Außenflächen beschreibt, kann z.B. gemäß $\Delta d(y) = \Delta(y_2) - (\Delta(y_1) + \Delta(y_3))/2$ bestimmt werden.

Eine weitere interessante Größe ist die x-Koordinate C(x) bzw. y-Koordinate C(y) des Mittelpunkts C (bestimmbar aus den beiden Meßpunkten D2, D2') bezogen auf den Soll-Mittelpunkt GC (Koordinatenursprung). Dadurch ist Verbiegung des gesamten Bündels bestimmbar.

Um auch eine Verdrillung des Abstandhalters zu erfassen, kann z.B. der Winkel zwischen der durch die Meßpunkte D1' und D3 gelegten Geraden mit der y-Achse bestimmt werden.

Bei der in Figur 3 dargestellten Anzeige auf dem Bildschirm der Recheneinrichtung CAL ist durch die Punkte D1, D2 und D3 auf rechnerische Weise eine Kurve zweiter Ordnung gelegt, und das gleiche erfolgt für die entsprechenden Meßpunkte der anderen Außenflächen. Diese Kurven und deren Schnittpunkte werden als Kontur des ausgemessenen Abstandhalters dargestellt. Die Koordinaten C(x) und C(y) für den Mittelpunkt des verformten Abstandhalters beschreiben die Verbiegung des Brennelements und ergeben sich aus dem Schnittpunkt der Verbindungslinien, die jeweils aus den diametralen Ecken der dargestellten, aus den Meßpunkten errechneten Kontur des verformten Abstandhalters errechnet sind. Der Winkel $\alpha$ beschreibt die Verdrillung des Brennelements und entspricht dem Mittelwert des Winkels, um den jeweils eine Diagonale des verformten Abstandhalters gegenüber der entsprechenden Diagonale der Geometrie G verdreht ist. Die Verbindungsgerade zweier benachbarter Ecken beschreiben die Außenkontur eines unverbeulten, aber verdrillten Abstandhalters, dessen Abweichung von der Geometrie G durch die Werte $\Delta d(x)$ und $\Delta d(y)$ beschrieben werden können. Die maximale Breite des Abstandhalters ist durch den Wert $\Delta$max beschrieben.

In der Regel genügt es, diese geeichten, charakteristischen Meßgrößen auf einem Display darzustellen oder in den Bildschirm einzublenden, während der Rest des Bildes benutzt werden kann, um die Videobilder der Kameras VC dem Bedienungspersonal für die optische Inspektion des Abstandhalters zur Verfügung zu stellen.

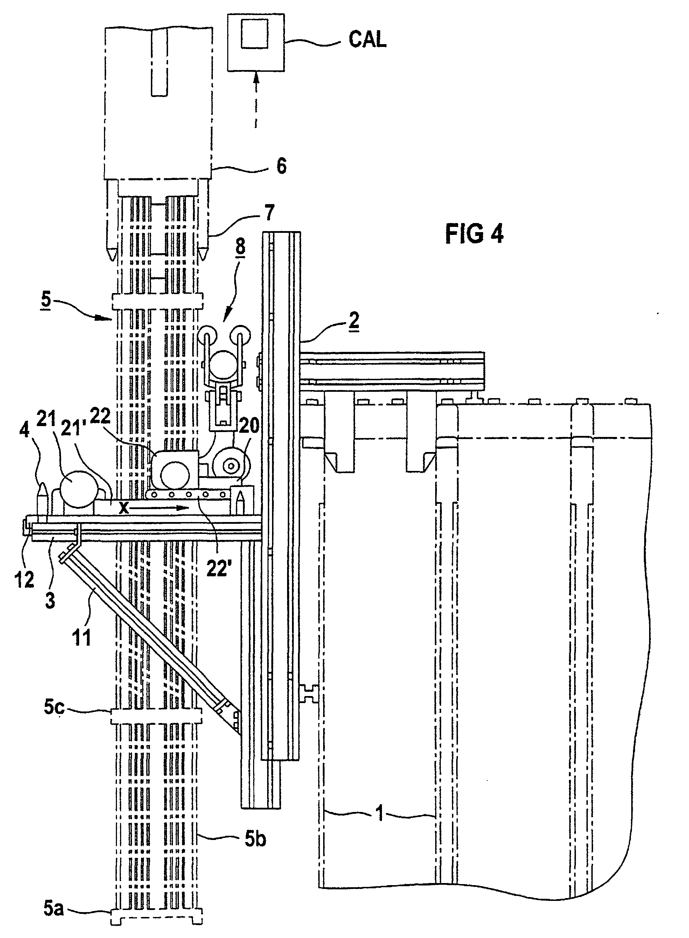

In Figur 4 sind die Wände 1 eines Brennelement-Lagergestells im Brennelement-Lagerbecken eines Kernkraftwerks erkennbar. Auch von dem Brennelement 5 sind nur der Fußteil 5a, die Steuerstab-Führungsrohre 5b und die Abstandhalter 5c dargestellt. Auf die Oberseite dieses Lagergestells ist ein Rahmen 2 aufgesetzt, der eine Arbeitsstation mit einem Rahmenteil 11 und einer Plattform 3 bildet, die das Brennelement seitlich umfassen. Auf Positionierbolzen 4 können verschiedene Apparaturen aufgesetzt werden, die für die Inspektion und/oder Wartung vorgesehen sind. Ein Druckwasser-Brennelement 5 wird mittels einer Brennelement-Lademaschine zu dieser Arbeitsstation transportiert, wobei in Figur 4 nur das untere Ende 6 des Lademaschinen-Mastes mit den Zentrierbolzen 7 erkennbar ist. In den nachfolgenden Figuren ist nicht dargestellt, daß mittels der Zentrierbolzen 7 der Mast 6 am Rahmen 2 positioniert und das Brennelement dann in einer definierten Stellung zum Rahmen abgestellt werden kann, der das Bezugssystem für die Vermessung des Brennelements definiert.

Auf die Plattform 3 ist eine Grundplatte 12 aufgesetzt, die über einen x-Antrieb 21 und einen y-Antrieb 22 einen längs entsprechender x- und y-Führungsschienen 21', 22' verschiebbaren Meßtisch 20 trägt. Die Fläche des Meßtisches 20 ist dabei parallel zur x-y-Ebene eines Bezugssystems, dessen z-Achse durch den Rahmen 2 und den Mast 6 der Lademaschine gegeben ist. Diese Teile stellen also eine Positioniereinrichtung dar, die gleichzeitig ein Koordinatensystem für die Meßwert-Auswertung liefern kann. Der Meßtisch kann über die Antriebe 21, 22 in der Meßebene an eine gewünschte Position in x- bzw. y-Richtung gefahren werden. Auf dem Meßtisch wird ein Modul 8 befestigt, das eine Meßeinrichtung enthält.

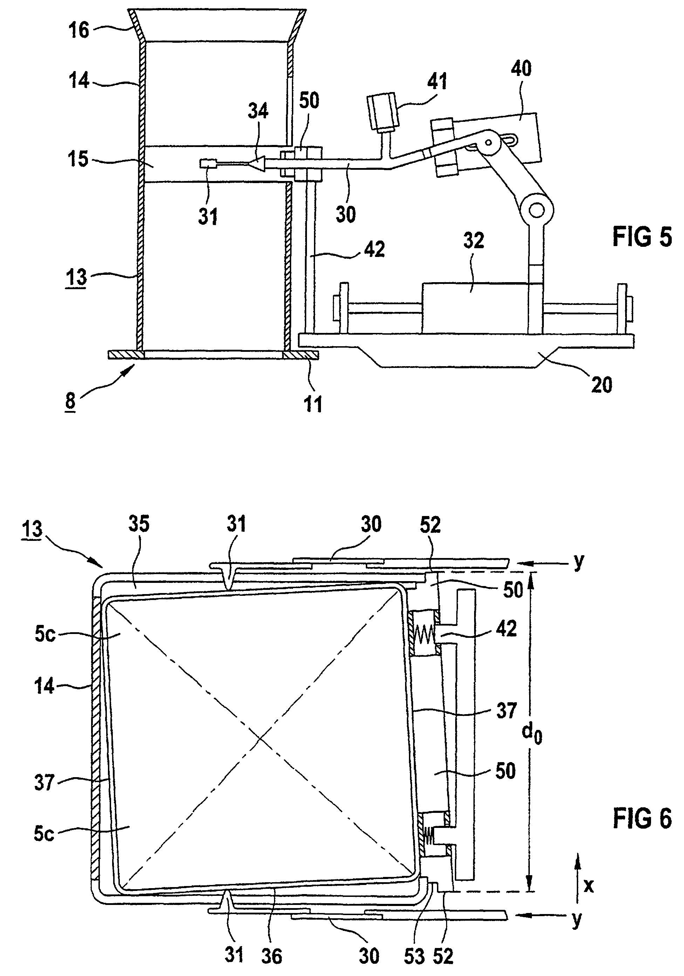

Dieses Modul 8 ist in Figur 5 dargestellt, deren Zeichenebene parallel zur y-z-Ebene des oben beschriebenen Bezugssystems ist. Ferner ist ein Schacht 13 gezeigt, der vor allem vorgesehen ist, das zu inspizierende Brennelement in den Fällen zu fixieren, in denen der Brennelement-Fuß nicht auf die in Figur 1 gezeigte Weise fixiert ist, sondern noch im Mast 6 der Lademaschine hängt. Der Schacht kann am Meßtisch oder über ein Rahmenteil 11 an der Grundplatte 12 oder der Plattform 3 befestigt sein. Er besteht aus Schachtwänden 14, die das Brennelement seitlich abstützen und auf drei Seiten einen Querschlitz 15 aufweisen, durch den drei Außenflächen des Brennelements bzw. dessen Abstandhalter 5c zugänglich werden. An den oberen Kanten der Schachtwände sind Leitebenen 16 angebracht, die von oben schräg auf die Kanten der Schachtwände zulaufen und dazu dienen, die Einführung des Brennelements in den Schacht zu erleichtern.

Die Meßeinrichtung besitzt zwei einander gegenüberliegende Meßarme 30, an deren einem Ende jeweils ein Tastkopf 31 sitzt. An ihrem anderen Ende sind die Meßarme jeweils über einen in y-Richtung arbeitenden Vorschub-Antrieb 32 mit dem Rest des Moduls verbunden. Die Meßarme sind dabei so angeordnet, daß ihre Längsachse parallel zur y-Achse des Bezugssystems ist, und daß die Tastköpfe durch die Querschlitze 15 hindurch jeweils an eine der beiden gegenüberliegenden Außenflächen 35, 36 des Brennelements bzw. Abstandhalters 5c, die nahezu parallel zu der Längsachse der Meßarme sind, angelegt werden können. Vorteilhaft sind die Arme so angebracht, daß ihr gegenseitiger Abstand einstellbar ist, denn dann ist die Vorrichtung für Brennelemente mit verschiedenen Breiten nutzbar. Bei Siedewasser-Brennelementen kann z.B. die Vorrichtung zum Ausmessen der Kästen und der Abstandhalter benutzt werden.

Zur ferngesteuerten Positionierung der Meßarme über die x-und y-Antriebe ist eine optische Kontrolle über eine Videokamera vorgesehen. Die Kamera 40 und die zugehörige Beleuchtung 41 sind daher am Meßtisch selbst angebracht oder Bestandteile des auf den Meßtisch aufgesetzten Moduls.

Ferner ist in Figur 5 ein Kalibrierstab 50 erkennbar, der in Figur 6 genauer dargestellt ist. Diese Figur 6 zeigt den Schacht 13 mit den Wänden 14 und die durch die Querschlitze hindurch auf zwei gegenüberliegende Außenflächen eines Abstandhalter 36 zugreifenden Tastköpfe 31 und deren Arme 30.

In Figur 6 ist die Zeichenebene parallel zur x-y-Ebene des Bezugssystems. Der Kalibrierstab 50 ist in diesem Ausführungsbeispiel am Meßtisch 20 über eine Halterung 42 befestigt, die von den x- und y-Antrieben 21 , 22 am Abstandhalter 36 positioniert wird, bis sie mit einem definierten Druck federnd anliegt. Damit bei der Kalibrierung eine Interpolation möglich wird, sind die Stirnflächen des Kalibrierstabes 50 dreistufig ausgebildet, d.h. sie weisen mehrere, jeweils einander gegenüberliegende Flächenstücke 52, 53 auf. Die Stufen sind so angelegt, daß durch den Kalibrierstab drei Längenmaße vorgegeben werden, von denen mindestens eines größer und eines kleiner ist als der gegenseitige Abstand von gegenüberliegenden Außenflächen des zu vermessenden Brennelements. Auf diese Weise kann man durch Interpolation eine Eichkurve für den Zusammenhang zwischen Tastkopf-Meßdaten und der Ausdehnung des Brennelements herstellen.

Die Meßarme 30 sind über einen Vorschub 32 synchron in y-Richtung verfahrbar. Sie können z.B. steif und an einem Ende drehbar gelagert sein, so daß die Auslenkung der Tastköpfe in x-Richtung durch einen Winkelgeber an der drehbaren Lagerung erfaßt werden kann. Statt eines y-Vorschubs kann z.B. auch ein hydraulischer Antrieb zum Ausfahren teleskopartiger Arme verwendet werden.

Bei dem in Figur 5 dargestellten Ausführungsbeispiel ist ein Teil 34 des Armes als eine Feder ausgebildet, die an beiden Seiten Dehnungsmeßstreifen trägt. Zur Bestimmung der Position der Meßköpfe wird der Widerstand der Dehnungsmeßstreifen über eine Wheatstone'sche Brückenschaltung gemessen. Figur 7 zeigt einen solchen Meßarm im Detail, und Figur 8 zeigt ein Schaltbild der Brückenschaltung.

Figur 7 zeigt den Arm 30 mit dem Tastkopf 63, der mit einer Wölbung 64 an den Außenflächen des Brennelements entlang gleitet. Der Arm enthält eine annähernd dreieckige Feder 60. An einer Ecke dieser Feder ist ein starrer Teil 62 des Armes mit dem Tastkopf 63 angeheftet. An der gegenüberliegenden Seite der Feder ist der starre, mit dem y-Antrieb 32 verbundene Teil 65 des Armes befestigt. Die Dreiecksform der Feder ist günstig, weil die Federspannung auf diese Weise gleichmäßig über die ganze Länge der Feder verteilt ist und eine nahezu lineare Abhängigkeit von der x-Auslenkung des Meßkopfes zeigt. Die beiden Dreiecksflächen der Feder sind beschichtet und bilden jeweils einen Dehnungsmeßstreifen. Von der Federspannung hängt der elektrische Widerstand jedes Dehnungsmeßstreifens annähernd linear ab. Aus der Messung dieser Widerstände lassen sich daher Meßwerte für die x-Position des Tastkopfes berechnen, die durch die Meßwerte, die am Kalibrierstab erhalten werden, geeicht werden können.

Über Anschlüsse 66 sind die Dehnungsmeßstreifen auf den Flächen der Feder 60 mit der Brückenschaltung 68 einer Meßelektronik verbunden, z.B. einer in die Recheneinrichtung CALC integrierten elektronischen Auswerteeinrichtung.

Einen Schaltplan der Brückenschaltung 68 zeigt Figur 8. $R_1$ und $R_2$ sind die zu messenden Widerstände der beiden Dehnungsmeßstreifen. Sie sind mit einstellbaren Widerständen $R_3$ und $R_4$ in einer Wheatstone'schen Brückenschaltung verbunden. Zum Abgleich der Brücke wird der Strom I durch geeignete Einstellung von $R_3$ und/oder $R_4$ auf Null geregelt. Dann sind die Spannungen, die an $R_1$ und $R_2$ bzw. $R_3$ und $R_4$ anliegen, jeweils vom gleichen Betrag.

Falls sich die Feder mit dem Dehnungsmeßstreifen in Ruhelage befindet, sind $R_1$ und $R_2$ gleich groß; $R_3$ und $R_4$ müssen dann ebenfalls gleich groß werden, damit es zu einem Abgleich kommt. Wird die Feder ausgelenkt, dann wird der eine Meßstreifen gedehnt, der andere gestaucht, d.h. einer der Widerstände wird größer, der andere kleiner. Das Verhältnis der beiden einstellbaren Widerstände $R_3$ und $R_4$ entspricht dann bei abgeglichener Brücke dem Verhältnis der zu messenden Widerstände $R_1$ und $R_2$. Effekte, die auf thermische Ausdehnung zurückzuführen sind, werden bei dieser Methode weitgehend eliminiert, da sich $R_1$ und $R_2$ gleichsinnig ändern.

Die Messung selbst wird vorteilhaft mit Wechselspannung nach dem bekannten Trägerfrequenz-Prinzip durchgeführt. Ein angeschlossener Meßverstärker kann dann so geeicht sein, daß er direkt die Spannung der Feder bzw. die Auslenkung des Tastkopfes angibt.

Die Erfindung ermöglicht daher, die Geometrie des Brennelements auf einfache Weise auszumessen und Verformungen festzustellen.

**Patentansprüche**

1. Verfahren zum Inspizieren eines bestrahlten Brennelements (FA) in einem Kernkraftwerk, bei dem in einer Meßeinrichtung (M) mindestens ein Abstandhalter (FS) des Brennelements und ein Kalibrierstab (CS) mit bekannten Abmessungen ausgemessen werden, derart, daß jeweils für zwei Punkte, die sich auf zwei ersten, in entgegengesetzte Richtungen weisenden Außenflächen (FSA, FSB) des Abstandhalters und zwei ersten, in diese Richtungen weisenden Flächenstücken (CA, CB) des Kalibrierstabes (CS) gegenüber liegen, ein Meßwert für den Abstand der Außenflächen bzw. der Flächenstücke gebildet wird, und daß der Meßwert für den Abstand der Außenflächen (FSA, FSB) mittels den bekannten Abmessungen des Kalibrierstabes und dem Meßwert für den Abstand der Flächenstücke (CA, CB) in einen geeichten Meßwert umgerechnet wird.

2. Verfahren nach Anspruch 1, **dadurch gekennzeichnet, daß** auch zweite in die entgegengesetzten Richtungen weisende Flächenstücke (CA', CB') des Kalibrierstabes oder eines weiteren Kalibrierstabes (CS') ausgemessen werden, wobei die zweiten Flächenstücke (CA', CB') gegenüber den ersten Flächenstücken (CA, CB) versetzt angeordnet sind.

3. Verfahren nach Anspruch 1 oder 2, **dadurch gekennzeichnet , daß** die Meßeinrichtung (M) mit dem Kalibrierstab (CS) unter Wasser angeordnet ist und mindestens zwei einander gegenüberliegende Tastköpfe (US1, US1B) sowie eine Videokamera (VC) enthält, daß die Messungen von einer an die Meßeinrichtung (M) angeschlossenen Recheneinrichtung (CAL) ausgewertet werden und daß das von der Videokamera aufgenommene Bild und mindestens ein in der Recheneinrichtung errechneter, geeichter Meßwert ($\Delta$max) für den maximalen Abstand einander gegenüberliegender Außenflächen (FSA, FSB) des Abstandhalters auf einem Bildschirm angezeigt wird.

4. Verfahren nach einem der Ansprüche 1 bis 3, **dadurch gekennzeichnet, daß** das Brennelement mit einem Endstück (5a) oder einem Abstandhalter (5c) an einem Rahmen (2) positioniert wird, der eine z-Achse eines kartesischen Bezugssystems festlegt, daß am Rahmen der Kalibrierstab (50) gehalten wird, dessen Abmessungen ($d_0$) in der x-Richtung des kartesischen Bezugssystems bekannt sind, daß die relative Lage der zwei ersten, sich entlang der y-Richtung erstreckenden Außenflächen (35, 36) des Abstandhalters (5c) und entsprechenden ersten Flächenstücken (52) des Kalibrierstabes (50) abgetastet wird, und dass mittels den bekannten Abmessungen ($d_0$) des Kalibrierstabes (50) aus beim Abtasten gewonnenen Messwerten mindestens ein geeichter Maximalwert ($\Delta$max) für den Abstand der beiden ersten Außenflächen (35, 36) des Abstandhalters (5c) gebildet wird.

5. Verfahren nach Anspruch 4, **dadurch gekennzeichnet, daß** zum Abtasten zwei einander gegenüberliegende Tastköpfe (31) synchron an den ersten Außenflächen (35, 36) des Abstandhalters und den ersten Flächenstücken (52) des Kalibrierstabs (50) entlang geführt und dabei nacheinander mindestens Meßsignale gebildet werden, die dem gegenseitigen Abstand zweier gegenüberliegender Punkte auf den Außenflächen (35, 36) des Abstandhalters und den Flächenstücken (52) des Kalibrierstabs entsprechen, und daß die Meßsignale für den bekannten Abstand ($d_o$) der Flächenstücke (52) benutzt werden, um die Meßsignale für die Außenflächen (35, 36) in einer Recheneinrichtung (CAL) automatisch in geeichte Meßwerte umzurechnen.

6. Verfahren nach Anspruch 5, **dadurch gekennzeichnet, daß** die relative Lage des Brennelements im kartesischen Bezugssystem (x, y, z) verändert wird, um auch zweite Außenflächen (37) des Abstandhalters mittels der gleichen Tastköpfe (31) und des gleichen Kalibrierstabes (50) abzutasten.

7. Verfahren nach Anspruch 4,
**dadurch gekennzeichnet, daß** zum Abtasten mehrere paarweise einander gegenüberliegende Tastköpfe (US1, US1B, US2, US2B, ...) verwendet werden, die gleichzeitig mehrere einander paarweise gegenüberliegende Punkte auf den Außenflächen (FSA, FSB) des Abstandhalters und des Kalibrierstabes (CS) ausmessen. (Figur 2)

8. Verfahren nach Anspruch 7,
**dadurch gekennzeichnet, daß** auch zweite, sich entlang der x-Richtung erstreckende Außenflächen des Abstandhalters und entsprechende zweite Flächenstücke des Kalibrierstabes oder eines anderen Kalibrierstabes mittels mehrerer einander gegenüberliegender Tastköpfe abgetastet werden.

9. Verfahren nach einem der Ansprüche 4 bis 8,
**dadurch gekennzeichnet**, däß auch weitere, gegenüber den ersten Flächenstücken (52) versetzte Flächenstücke (53) des ersten Kalibrierstabs (50) oder eines weiteren Kalibrierstabs abgetastet werden.

10. Vorrichtung zum Inspizieren eines bestrahlten Brennelementes in einem Kernreaktor, mit einer Meßeinrichtung (M) mit mindestens einem Kalibrierstab (CS) bekannter Abmessungen ($d_0$) einer Positioniereinrichtung (P) und einer Recheneinrichtung (CALC), wobei die Positioniereinrichtung (P) die relative Lage eines Abstandhalters (FS) eines Brennelements zur Meßeinrichtung fixiert, die Meßeinrichtung (M) auf zwei in entgegengesetzte Richtungen weisende erste Außenflächen (FSA, FSB) des Abstandhalters und zwei in die gleichen Richtungen weisende erste Flächenstücke (CA, CB) des Kalibrierstabs (CS) gerichtet ist, um Meßwerte für die relative Lage der Außenflächen (FSA, FSB) und Flächenstücke (CA, CB) zu bilden, und die Recheneinrichtung derart ausgebildet ist, daß aus den Meßwerten und einem gespeicherten Bezugswert ($d_0$) für die Abmessungen des Kalibrierstabes mindestens ein auf diesen Bezugswert geeichter maximaler Abstand (Δmax) der Außenflächen ermittelt und angezeigt wird.

11. Vorrichtung nach Anspruch 10,
**dadurch gekennzeichnet, daß** die Positioniereinrichtung.(P) eine Halterung, in die das Brennelement bezüglich seiner Längsachse in vertikaler Richtung einsetzbar und in horizontaler Richtung fixierbar ist, und einen Positionierantrieb (PD) enthält, mit dem die Meßeinrichtung mit dem Kalibrierstab in vertikaler Richtung verfahrbar ist.

12. Vorrichtung nach Anspruch 10 oder 11,
**dadurch gekennzeichnet, daß** die Meßeinrichtung zwei einander gegenüberliegende Tastköpfe (31) enthält, die mittels eines ersten Antriebs (32) synchron entlang den Außenflächen (35, 36) des Abstandhalters und den Flächenstücken (52) verfahrbar sind. (Figuren 4 bis 6)

13. Vorrichtung nach Anspruch 10 oder 11,
**dadurch gekennzeichnet, daß** die Meßeinrichtung mehrere einander gegenüberliegende Tastköpfe (US1, US1B, US2, US2B, ...) enthält, die gleichzeitig Meßwerte für mehrere Punkte auf den ersten Außenflächen (FSA, FSB) und Flächenstücken (CA, CB) bilden.

14. Vorrichtung nach Anspruch 13,
**dadurch gekennzeichnet, daß** die Meßeinrichtung weitere Tastköpfe (US') enthält, die auf einander gegenüberliegende Punkte auf zwei in entgegengesetzte Richtungen weisende, zweite Außenflächen des Abstandhalters und in diese Richtungen zeigende zweite Flächenstücke des Kalibrierstabes oder eines weiteren Kalibrierstabes gerichtet sind.

15. Vorrichtung nach einem der Ansprüche 10 bis 14,
**dadurch gekennzeichnet, daß** die Meßeinrichtung einen zweiten Antrieb enthält, mit dem der Kalibrierstab an den Abstandhalter anlegbar ist.

16. Vorrichtung nach einem der Ansprüche 10 bis 15,
**dadurch gekennzeichnet** einen Rahmen (2), der die z-Achse eines kartesischen Koordinatensystems festlegt, einen in einer x-, y-Ebene des kartesischen Koordinatensystems verschiebbaren Meßtisch (20) mit zwei sich in y-Richtung erstreckenden Armen (30), zwischen denen ein Abstandhalter des Brennelements positionierbar ist, und mindestens einem Paar an einander gegenüberliegenden Positionen der Arme (30) angebrachten Tastköpfen (31), wobei der Kalibrierstab (50) in y-Richtung verfahrbar ist, und die Recheneinrichtung (CALC) an die Tastköpfe (31) angeschlossen ist, wobei der Bezugswert für die Länge ($d_0$) des Kalibrierstabs in der Recheneinrichtung (CALC) gespeichert ist, und wobei mit den Tastköpfen (31) die Ausdehnung des Abstandhalters in x-Richtung und die Länge des Kalibrierstabs (50) abtastbar ist.

17. Vorrichtung nach Anspruch 16,
**dadurch gekennzeichnet, daß** das Brennelement mit dem Fuß oder Kopf (5a) am Rahmen (2) positionierbar und der Meßtisch (20) in z-Richtung verschiebbar ist.

18. Vorrichtung nach Anspruch 17,
**dadurch gekennzeichnet, daß** der

Rahmen eine in z-Richtung verschiebbare Grundplatte (12) aufweist, auf der der Meßtisch (20) auswechselbar montiert ist, und daß der Meßtisch (20) auf der Grundplatte mittels eines Antriebs (21, 22) in x-Richtung und y-Richtung verschiebbar ist.

**Claims**

1. A method for inspecting an irradiated fuel element (FA) in a nuclear power plant, in which in a measuring device (M) at least one spacer (FS) of the fuel element and a calibration rod (CS) with known dimensions are measured in such a way that in each case for two points which are situated opposite one another on two first outer surfaces (FSA, FSB), pointing in opposite directions, of the spacer and two first subareas (CA, CB) of the calibration rod (CS) pointing in these directions, a measured value is formed for the spacing between the outer surfaces and between the subareas, and that the measured value for the spacing between the outer surfaces (FSA, FSB) is converted into a calibrated measured value with the aid of the known dimensions of the calibration rod and of the measured value for the spacing between the subareas (CA, CB).

2. Method according to Claim 1, **characterized in that** second subareas (CA', CB') of the calibration rod or of a further calibration rod (CS'), which point in opposite directions, are also measured, the second subareas (CA', CB') being arranged offset relative to the first subareas (CA, CB).

3. Method according to one of Claims 1 and 2, **characterized in that** the measuring device (M) with the calibration rod (CS) is arranged under water and contains at least two mutually opposite probes (US1, US1B) and a video camera (VC), **in that** the measurements are evaluated by a computer (CAL) connected to the measuring device (M), and **in that** the image picked up by the video camera and at least one calibrated measured value ($\Delta$max), calculated in the computer, for the maximum spacing between mutually opposite outer surfaces (FSA, FSB) of the spacer are displayed on a display screen.

4. Method according to one of Claims 1 to 3, **characterized in that** the fuel element is positioned with an end piece (5a) or a spacer (5c) on a frame (2) which fixes a z-axis of a Cartesian reference system, **in that** held on the frame is the calibration rod (50) whose dimensions (do) in the x-direction of the Cartesian reference system are known, **in that** the relative position of two first outer surfaces (35, 36), extending along the y-direction, of the spacer (5c) and corresponding first subareas (52) of the calibration rod (50) is scanned, and **in that** at least one calibrated maximum value ($\Delta$max) for the spacing between the two first outer surfaces (35, 36) of the spacer (5c) is formed from measured values obtained during scanning with the aid of the known dimensions (do) of the calibration rod (50).

5. Method according to Claim 4, **characterized in that**, for the purpose of scanning, two mutually opposite probes (31) are guided synchronously along the first outer surfaces (35, 36) of the spacer and the first subareas (52) of the calibration rod (50), giving rise sequentially in the process to the formation at least of measuring signals which correspond to the mutual spacing between two opposite points on the outer surfaces (35, 36) of the spacer and the subareas (52) of the calibration rod, and **in that** the measuring signals for the known spacing (do) between the subareas (52), are used in order to convert the measuring signals for the outer surfaces (35, 36) into calibrated measured values automatically in a computer (CAL).

6. Method according to Claim 5, **characterized in that** the relative position of the fuel element in the Cartesian reference system (x, y, z) is varied in order also to scan second outer surfaces (37) of the spacer by means of the same probes (31) and of the same calibration rod (50).

7. Method according to Claim 4, **characterized in that**, for the purpose of scanning, use is made of a plurality of probes (US1, US1B, US2, US2B, ...) which are situated opposite one another in pairs and simultaneously measure a plurality of points, situated opposite one another in pairs, on the outer surfaces (FSA, FSB) of the spacer and of the calibration rod (CS). (Figure 2)

8. Method according to Claim 7, **characterized in that** second outer surfaces, extending along the x-direction, of the spacer and corresponding second subareas of the calibration rod or of another calibration rod are also scanned by means of a plurality of mutually opposite probes.

9. Method according to one of Claims 4 to 8, **characterized in that** further subareas (53), offset relative to the first subareas (52), of the first calibration rod (50) or of a further calibration rod are also scanned.

10. Device for inspecting an irradiated fuel element in a nuclear reactor, having a measuring device (M) with at least one calibration rod (CS) of known dimensions (do), a positioning device (P) and a computer (CALC), the positioning device (P) fixing the relative position of a spacer (FS) of a fuel element relative to the measuring device, the measuring device (M) being directed towards two first outer surfaces (FSA, FSB), pointing in opposite directions, of the spacer, and two first subareas (CA, CB) of the calibration rod (CS), pointing in the same directions, in order to form measured values for the relative position of the outer surfaces (FSA, FSB) and subareas (CA, CB), and the computer being designed in such a way that the measured values and a stored reference value ($d_0$) for the dimensions of the calibration rod are used to determine and display at least one maximum spacing ($\Delta$max), calibrated to this reference value between the outer surfaces.

11. Device according to Claim 10, **characterized in that** the positioning device (P) contains a holder into which the fuel element can be inserted in the vertical direction with reference to its longitudinal axis and can be fixed in the horizontal direction, and a positioning drive (PD) with the aid of which the measuring device can be moved with the calibration rod in the vertical direction.

12. Device according to Claim 10 or 11, **characterized in that** the measuring device contains two mutually opposite probes (31) which can be moved with the aid of a first drive (32) synchronously along the outer surfaces (35, 36) of the spacer and the subareas (52). (Figures 4 to 6)

13. Device according to Claim 10 or 11, **characterized in that** the measuring device contains a plurality of mutually opposite probes (US1, US1B, US2, US2B, ...) which simultaneously form measured values for a plurality of points on the first outer surfaces (FSA, FSB) and subareas (CA, CB).

14. Device according to Claim 13, **characterized in that** the measuring device contains further probes (US') which are directed towards mutually opposite points on two second outer surfaces, pointing in opposite directions, of the spacer and second subareas, pointing in these directions, of the calibration rod or of a further calibration rod.

15. Device according to one of Claims 10 to 14, **characterized in that** the measuring device contains a second drive with the aid of which the calibration rod can be laid against the spacer.

16. Device according to one of Claims 10 to 15, **characterized by** a frame (2) which fixes the z-axis of a Cartesian coordinate system, a plane table (20), which can be displaced in an x-, y-plane of the Cartesian coordinate system and has two arms (30), which extend in the y-direction and between which a spacer of the fuel element can be positioned, and at least one pair of probes (31) fitted at mutually opposite positions on the arms (30), the calibration rod (50) being able to be moved in the y-direction, and the computer (CALC) being connected to the probes (31), the reference value for the length (do) of the calibration rod being stored in the computer (CALC), and it being possible to use the probes (31) to scan the expansion of the spacer in the x-direction and the length of the calibration rod (50).

17. Device according to Claim 16, **characterized in that** the fuel element can be positioned with the aid of the foot or head (5a) on the frame (2), and the plane table (20) can be displaced in the z-direction.

18. Device according to Claim 17, **characterized in that** the frame has a base plate (12) which can be displaced in the z-direction and on which the plane table (20) can be exchangeably mounted, and **in that** the plane table (20) can be displaced in the x-direction and y-direction on the base plate by means of a drive (21, 22).

## Revendications

1. Procédé d'inspection d'un assemblage combustible (FA) irradié dans une centrale nucléaire, dans lequel on mesure, dans un dispositif (M) de mesure, au moins une entretoise (FS) de l'assemblage combustible et un crayon (CS) d'étalonnage de dimensions connues, de façon à ce que, respectivement pour deux points qui se trouvent en regard sur deux premières surfaces (FSA, FSB) extérieures et tournées dans des directions opposées de l'entretoise et deux premières parties (CA, CB) de surface tournées dans ces directions du crayon d'étalonnage, il soit formé une valeur de mesure pour la distance entre les surfaces extérieures et respectivement les parties de surface et en ce que l'on transforme par le calcul la valeur de mesure de la distance entre les surfaces (FSA, FSB) extérieures au moyen des dimensions connues du crayon d'étalonnage et de la valeur de mesure de la distance entre les parties (CA, CB) de surface en une valeur de mesure étalonnée.

2. Procédé suivant la revendication 1, **caractérisé en ce que** l'on mesure aussi deux parties (CA', CB') de surface tournées dans des sens opposés du crayon d'étalonnage ou d'un autre crayon (CS') d'étalonnage, les deuxièmes parties (CA', CB') de surface étant décalées par rapport aux premières parties (CA, CB) de surface.

3. Procédé suivant la revendication 1 ou 2, **caractérisé en ce que** le dispositif (M) de mesure ayant le crayon (CS) d'étalonnage est disposé sous l'eau et comporte au moins deux têtes (US1, US1B) de balayage opposées l'une à l'autre ainsi qu'une caméra (VC) vidéo, **en ce que** l'on exploite les mesures par un dispositif (CAL) de calcul raccordé au dispositif (M) de mesure et **en ce que** l'on affiche, sur un écran, l'image enregistrée par la caméra vidéo et au moins une valeur (Δmax) de mesure étalonnée et calculée par le dispositif de calcul de la distance maximum entre des surfaces (FSA, FSB) extérieures opposées l'une à l'autre de l'entretoise.

4. Procédé suivant l'une des revendications 1 à 3, **caractérisé en ce que** l'on met l'assemblage combustible en position sur un cadre (2) par un embout (5a) ou par une entretoise (5c) qui fixe un axe z d'un système cartésien de référence,

en ce que l'on maintient le crayon (50) d'étalonnage sur le cadre, crayon dont les dimensions $(d_0)$ sont connues dans les directions x du système cartésien de référence,

en ce que l'on balaie la position relative des deux premières surfaces (35, 36) extérieures s'étendant le long de la direction y de l'entretoise (5c) et des premières parties (52) de surface correspondantes du crayon (50) d'étalonnage,

et **en ce qu'**au moyen des dimensions $(d_0)$ connues du crayon (50) d'étalonnage on forme, pour les valeurs de mesure obtenues lors du balayage, au moins une valeur (Δmax) maximum étalonnée de la distance entre les deux premières surfaces (35, 36) extérieures de l'entretoise (5c).

5. Procédé suivant la revendication 4, **caractérisé en ce que** pour le balayage, on fait passer deux têtes (31 ) mutuellement opposées de balayage en synchronisme sur les premières surfaces (35, 36) extérieures de l'entretoise et sur les premières parties (52) de surface du crayon (50) d'étalonnage et on forme ainsi successivement au moins des signaux de mesure qui correspondent à la distance mutuelle de deux points opposés sur les surfaces (35, 36) extérieures de l'entretoise et sur les parties (52) de surface du crayon d'étalonnage et **en ce que** l'on utilise des signaux de mesure pour la distance $(d_0)$ connue entre les parties (52) de surface pour transformer par le calcul dans un dispositif (CAL) de calcul les signaux de mesure pour les surfaces (35, 36) extérieures automatiquement en des valeurs de mesure étalonnées.

6. Procédé suivant la revendication 5, **caractérisé en ce que** l'on modifie la position relative de l'assemblage combustible dans le système (x, y, z) cartésien de référence pour balayer aussi deux surfaces (37) extérieures de l'entretoise au moyen des mêmes têtes (31) de balayage et du même crayon (50) d'étalonnage.

7. Procédé suivant la revendication 4, **caractérisé en ce que** l'on utilise, pour le balayage, plusieurs têtes (US1, US1B, US2, US2B...) de balayage mutuellement opposées par paires, qui mesurent en même temps plusieurs points mutuellement opposés par paires sur les surfaces (FSA, FSB) extérieures de l'entretoise et du crayon (CS) d'étalonnage (figure 2).

8. Procédé suivant la revendication 7, **caractérisé en ce que** l'on balaie aussi deux surfaces extérieures s'étendant le long de la direction x de l'entretoise et deux parties de surface correspondantes du crayon d'étalonnage ou d'un autre crayon d'étalonnage, au moyen de plusieurs têtes de balayage mutuellement opposées.

9. Procédé suivant l'une des revendications 4 à 8, **caractérisé en ce que** l'on balaie aussi d'autres parties (53) de surface du premier crayon (50) d'étalonnage ou d'un autre crayon d'étalonnage qui sont décalées par rapport aux premières parties (52) de surface.

10. Dispositif d'inspection d'un assemblage combustible irradié dans un réacteur nucléaire comprenant un dispositif (M) de mesure ayant au moins un crayon (CS) d'étalonnage de dimensions $(d_0)$ connues, un dispositif (P) de mise en position et un dispositif (CALC) de calcul, le dispositif (P) de mise en position fixant la position relative d'une entretoise (FS) d'un assemblage combustible par rapport au dispositif de mesure, le dispositif (M) de mesure étant dirigé sur deux premières surfaces (FSA, FSB) extérieures tournées dans des directions opposées de l'entretoise et sur deux premières parties (CA, CB) de surface tournées dans les mêmes directions du crayon (CS) d'étalonnage pour former des valeurs de mesure de la position relative des surfaces (FSA, FSB) extérieures et des parties (CA, CB) de surface et l'unité de calcul est constituée de façon à déterminer, à partir des valeurs de mesure et d'une valeur $(d_0)$ de référence, qui est mémorisée, des dimensions du crayon d'étalonnage, au moins une distance (Δmax) maximum étalonnée sur cette valeur de référence des surfaces extérieures et à l'afficher.

11. Dispositif suivant la revendication 10, **caractérisé en ce que** le dispositif (P) de mise en positionnement comporte une fixation dans laquelle l'assemblage combustible peut être inséré en direction verticale par rapport à son axe longitudinal et être immobilisé en direction horizontale et un dispositif d'entraînement (PD) de mise en position, par lequel le dispositif de mesure peut être déplacé avec le crayon d'étalonnage en direction verticale.

12. Dispositif suivant la revendication 10 ou 11, **caractérisé en ce que** le dispositif de mesure comporte deux têtes (31) de balayage mutuellement opposées qui peuvent être déplacées au moyen d'un premier dispositif (32) d'entraînement en synchronisme le long des surfaces (35, 36) extérieures de l'entretoise et des parties (52) de surface (figures 4 à 6).

13. Dispositif suivant la revendication 10 ou 11, **caractérisé en ce que** le dispositif de mesure comporte plusieurs têtes (US1, US1B, US2, US2B...) de balayage mutuellement opposées qui forment simultanément des valeurs de mesure pour plusieurs points sur les premières surfaces (FSA, FSB) extérieures et les parties (CA, CB) de surface.

14. Dispositif suivant la revendication 13, **caractérisé en ce que** le dispositif de mesure comporte d'autres têtes (US') de balayage qui sont dirigées sur des points mutuellement opposés sur des deuxièmes surfaces extérieures tournées dans des directions opposées de l'entretoise et sur des deuxièmes parties de surface tournées dans ces directions du crayon d'étalonnage ou d'un autre crayon d'étalonnage.

15. Dispositif suivant l'une quelconque des revendications 10 à 14, **caractérisé en ce que** le dispositif de mesure comporte un deuxième dispositif d'entraînement par lequel le crayon d'étalonnage peut être mis sur l'entretoise.

16. Dispositif suivant l'une des revendications 10 à 15, **caractérisé par** un cadre (2) qui fixe l'axe z d'un système cartésien de coordonnée, une table (20) de mesure coulissant dans un plan x-y du système cartésien de coordonnée, et ayant deux bras (30) s'étendant dans la direction y et entre lesquels une entretoise de l'assemblage combustible peut être mise en position et au moins un couple de têtes (31 ) de balayage placé sur des positions mutuellement opposées des bras (30), le crayon (50) d'étalonnage pouvant être déplacé dans la direction y et le dispositif (CALC) de calcul étant raccordé aux têtes (31 ) de balayage, la valeur de référence de la longueur ($d_0$) du crayon d'étalonnage étant mémorisée dans le dispositif (CALC) de calcul et l'étendue de l'entretoise dans la direction x et la longueur du crayon (50) d'étalonnage pouvant être balayées par les têtes (31) de balayage.

17. Dispositif suivant la revendication 16, **caractérisé en ce que** l'assemblage combustible peut être mis en place sur le cadre (2) par le pied ou par la tête (5a) et la table (20) de mesure peut coulisser dans la direction z.

18. Dispositif suivant la revendication 17, **caractérisé en ce que** le cadre comporte une plaque (12) de base pouvant coulisser dans la direction z et sur laquelle la table (20) de mesure peut être montée avec possibilité de remplacement, et **en ce que** la table (20) de mesure peut coulisser sur la plaque de base au moyen d'un dispositif (21, 22) d'entraînement dans la direction x et dans la direction y.

FIG 1

**FIG 2**

**FIG 8**

Spacer 3

y

x

α

D1
D1'

G

D2
D2'

GC
C

Δd(y)

D3
D3'

C (x) = -1204 μm
C (y) = +0941 μm
Δd (x) =   828 μm
Δd (y) =  1023 μm

α  = -2° 04'
Δ max = 2085 μm

**FIG 3**

66

66

30

66

64

60

63

65

62

**FIG 7**

CAL

6

7

8

FIG 4

5

2

4  21  21'  22

20

X

22'

12

3

11

5c

1

5b

5a

FIG 5

FIG 6